# EUROPÄISCHE PATENTSCHRIFT

(11) **EP 4 208 649 B1**
(45) Veröffentlichungstag und Bekanntmachung des Hinweises auf die Patenterteilung: **11.03.2026**
(21) Anmeldenummer: 21763319.7
(22) Anmeldetag: 17.08.2021
(51) Int. Cl.: F16B 25/00, F16B 33/00, C23C 28/00, B05D 5/08

(54) **BETONSCHRAUBE UND VERFAHREN ZUR HERSTELLUNG DER BETONSCHRAUBE**
CONCRETE SCREW AND METHOD FOR PRODUCING THE CONCRETE SCREW
VIS À BÉTON ET PROCÉDÉ DE FABRICATION DE LA VIS À BÉTON

(30) Priorität: 01.09.2020 DE 102020122776
(43) Veröffentlichungstag der Anmeldung: 12.07.2023
(73) Patentinhaber: fischerwerke GmbH & Co. KG, 72178 Waldachtal (DE)
(72) Erfinder: ECHLE, Benjamin, 77776 Schapbach (DE); HACKER, Oliver, 72227 Egenhausen (DE); SCHILLING, Sebastian, 72285 Pfalzgrafenweiler-Durrweiler (DE)
(86) Internationale Anmeldenummer: PCT/EP2021/072770
(87) Internationale Veröffentlichungsnummer: WO 2022/048902

(56) Entgegenhaltungen:
- EP-A1- 1 712 659
- EP-B1- 2 276 815
- WO-A1-02/088262
- DE-A1- 102013 108 018
- US-A- 5 885 041
- US-B2- 10 119 094
- US-B2- 9 738 792

## Beschreibung

Die Erfindung betrifft ein Verfahren zur Herstellung einer Betonschraube mit den Merkmalen des Oberbegriffs des Anspruchs 1.

Betonschrauben sind Schrauben, die in ein Bohrloch eingeschraubt werden können, das in ein Bauteil aus einem mineralischen Baustoff gebohrt wurde. Das Bauteil ist insbesondere ein Bauteil aus Beton, wie eine Wand oder eine Decke eines Gebäudes. Derartige Betonschrauben weisen ein Außengewinde auf, das beim Einschrauben in das Bohrloch ein Gegengewinde in die Wand des Bohrlochs furcht, sodass eine planmäßig eingeschraubte Betonschraube Kräfte über das Außengewinde in das Bauteil einleiten kann. Damit die Betonschraube das Gegengewinde in die Wand des Bohrlochs furchen kann, muss zumindest ein Teilbereich des Außengewindes eine Härte aufweisen, die ein Eindringen des Außengewindes in Beton und ein lokales Abtragen des Betons im Bereich des zu furchenden Gegengewindes ermöglicht.

Aus der Europäischen Patentschrift EP 0 560 789 B1 ist eine gattungsgemäße Betonschraube bekannt. Zur Verringerung des Widerstands beim Eindrehen der Betonschraube in ein Bohrloch wird in dieser Patentschrift vorgeschlagen, zumindest die Gewindeflanken mit einem Trockenschmiermittel zu beschichten. Als Trockenschmiermittel wird ein Kunststoff aus Fluor und Kohlenstoff vorgeschlagen, der direkt auf den Stahl der Schraube oder eine galvanische Korrosionsschutzschicht aufgebracht wird. Allerdings wird als Nachteil beschrieben, dass das Trockenschmiermittel beim Einschrauben in den mineralischen Baustoff sehr leicht und schlussendlich vollständig von den Gewindeflanken abgerieben wird. Nachteilig an der bekannten Betonschraube ist somit, dass die reibungsmindernde Wirkung des Trockenschmiermittels und damit die Verringerung des Widerstands beim Eindrehen der Schraube nur zu Beginn des Eindrehens vorhanden ist. DE102013108018A1 offenbart ein Verfahren für die Herstellung einer Betonschraube.

Aufgabe der Erfindung ist es daher, ein Herstellungsverfahren einer Betonschraube vorzuschlagen, bei der das Eindrehverhalten verbessert ist.

Ein erfindungsgemäßes Verfahren zur Herstellung einer derartigen Betonschraube ist in Anspruch 1 beansprucht. Die abhängigen Ansprüche beziehen sich auf bevorzugte Ausgestaltungsformen der erfindungsgemäßen Betonschraube beziehungsweise des erfindungsgemäßen Verfahrens.

Die Betonschraube zum Einschrauben in ein Bohrloch in einem Bauteil aus Beton weist einen Grundkörper auf, der aus Stahl hergestellt ist. Der Grundkörper umfasst die aus Stahl hergestellten Teile der Betonschraube, wie einen Schaft, das Außengewinde und ein Drehangriffmittel, wie beispielsweise einen Sechskantkopf oder einen Innenmehrkant, an den ein Drehwerkzeug an der Schraube angesetzt werden kann. Insbesondere ist der Grundkörper einstückig aus einem Material hergestellt, insbesondere durch Umformen eines Rohlings aus Stahl.

Das Außengewinde der Betonschraube weist eine Härte auf, die so groß ist, dass das Außengewinde beim Einschrauben in das Bohrloch ein Gegengewinde in die Wand des Bohrlochs furcht. Insbesondere beträgt die Härte des Außengewindes mindestens 50 HRC, insbesondere mindestens 55 HRC. Allerdings muss nicht das gesamte Außengewinde diese Härte aufweisen, sondern es genügt, wenn das Außengewinde nur in einem Furchabschnitt und dort insbesondere nur eine äußere Schicht ausreichend hart ist. Insbesondere bildet ein vorderer Teil des Außengewindes den Furchabschnitt. Dabei ist mit "vorderer Teil" der Teil des Außengewindes gemeint, der beim planmäßigen Einbringen der Betonschraube in das Bohrloch als erstes in das Bohrloch eindringt.

Damit die Betonschraube mit der notwendigen Härte möglichst kostengünstig hergestellt werden kann, wird zur Herstellung des Grundkörpers ein härtbarer Kohlenstoffstahl verwendet, auf den nach dem Härten eine erste, metallische Korrosionsschutzschicht zum Schutz des Grundkörpers gegen Korrosion aufgebracht wird. Bei der Korrosionsschutzschicht handelt es sich vorzugsweise um einen Zink-Nickel (ZnNi)-Überzug, der galvanisch aufgebracht ist.

Das Einschrauben der Betonschraube in ein Bohrloch erfolgt üblicherweise mit einem Schlagschrauber, der das zum Einschrauben und Furchen des Gewindes notwendige Drehmoment auf die Betonschraube aufbringen kann. Um das zum Einschrauben notwendige Drehmoment möglichst gering zu halten, ist auf den Grundkörper der Betonschraube, insbesondere im Bereich des Außengewindes, insbesondere, sofern vorhanden, im Bereich des Furchabschnitts, auf der Korrosionsschutzschicht ein reibungsminderndes Schmiermittel aufgebracht. Bei dem Schmiermittel handelt es sich insbesondere um ein Trockenschmiermittel, insbesondere um ein teilkristallines Polymer, insbesondere um Polytetrafluorethylen (PTFE).

Erfindungsgemäß ist das Schmiermittel in einer Matrix einer zweiten, organischen Korrosionsschutzschicht angeordnet, die auf der ersten, metallischen Korrosionsschutzschicht aufgebracht ist. Die Matrix der zweiten, organischen Korrosionsschutzschicht ist vorzugsweise ein Duroplast, insbesondere ein Kunstharz, insbesondere ein härtbares Reaktionsharz, insbesondere ein Epoxidharz. Das Schmiermittel ist in der Matrix insbesondere homogen, aber punktuell verteilt. Insbesondere weist die Matrix einen niedrigeren Schmelzpunkt auf, als das Schmiermittel. So bildet beispielsweise PTFE in einer Matrix aus einem Epoxidharz, das einen niedrigeren Schmelzpunkt als PTFE aufweist, kleine Klümpchen, die im Wesentlichen gleich verteilt in der Matrix angeordnet sind. Beim Einschrauben der Betonschraube in ein Bohrloch reduziert das Schmiermittel die Reibung zwischen dem Grundkörper der Schraube und der Wand des Bohrlochs, insbesondere dann, wenn das Schmiermittel im Bereich eines Furchabschnitts der Betonschraube angeordnet ist.

Die Einbettung des Schmiermittels in eine Matrix einer organischen Korrosionsschutzschicht hat den Vorteil, dass die Verbindung des Schmiermittels mit der ersten, metallischen Korrosionsschutzschicht durch einen für diesen Zweck optimierten Träger für das Schmiermittel erfolgt, nämlich durch die organische Korrosionsschutzschicht. Aufgrund der Verbindung der zweiten, organischen Korrosionsschutzschicht mit der ersten, metallischen Korrosionsschutzschicht ist gewährleistet, dass das in der Matrix der zweiten, organischen Korrosionsschutzschicht enthaltene Schmiermittel ausreichend fest mit dem Grundkörper der Betonschraube verbunden ist, sodass das Schmiermittel sich beim Einschrauben der Betonschraube in ein Bohrloch nicht, beziehungsweise deutlich weniger löst, als bei der aus dem Stand der Technik bekannten und eingangs beschriebenen Betonschraube der EP 0 560 789 B1. Insbesondere dann, wenn die erste, metallische Korrosionsschutzschicht eine ZnNi-Schicht ist, ist die Verbindung zwischen der ersten, metallischen Korrosionsschutzschicht und der zweiten, organischen Korrosionsschutzschicht relativ beständig und abriebfest, da die ZnNi-Schicht an ihrer Oberfläche Mikrorisse aufweist, die deutlich größer sind, als bei einer herkömmlichen galvanischen Verzinkung, also wenn nur Zink aufgebracht wird. Bei einer ZnNi-Schicht kann die organische Korrosionsschutzschicht in die Mikrorisse eindringen, wodurch ein fester und beständiger Formschluss zwischen den beiden Korrosionsschutzschichten entsteht.

Gemäß der Erfindung sind in der Matrix der zweiten, organischen Korrosionsschutzschicht zudem zusätzliche Partikel eingebettet, die die Abriebfestigkeit, das Furchen und/oder die Eindreheigenschaften der Betonschraube verbessern. Es handelt sich hierbei um anorganische Partikel. Die Partikel sind insbesondere ebenfalls homogen in der Matrix verteilt. Die Matrix kann Partikel aus einem Material oder Partikel unterschiedlicher Materialien enthalten. Die Partikel können insbesondere aus Metall bestehen, insbesondere aus Aluminium. In Kombination oder alternativ können Partikel aus Quarz, Korund oder Glas in der Matrix eingebettet sein. Die Partikel können insbesondere eine Härte aufweisen, die größer als 40 HRC, insbesondere größer als 50 HRC ist.

Das erfindungsgemäße Herstellungsverfahren umfasst die in Anspruch 1 beschriebenen Verfahrensschritte.

Vorzugsweise ist die erste, metallische Korrosionsschutzschicht ein Zink-Nickel-Überzug, der galvanisch auf den Grundkörper aufgebracht wird.

Vorzugsweise erfolgt das Aushärten thermisch, vorzugsweise bei einer Temperatur von maximal 170 °C mit einer Einwirkungsdauer von maximal 35 Minuten oder bei einer Temperatur von maximal 185 °C mit einer Einwirkungsdauer von maximal 25 Minuten oder bei Maximalwerten der Temperatur und Einwirkungszeit, die dazwischen liegen und durch lineare Interpolation zwischen den genannten Wertepaaren ermittelbar sind.

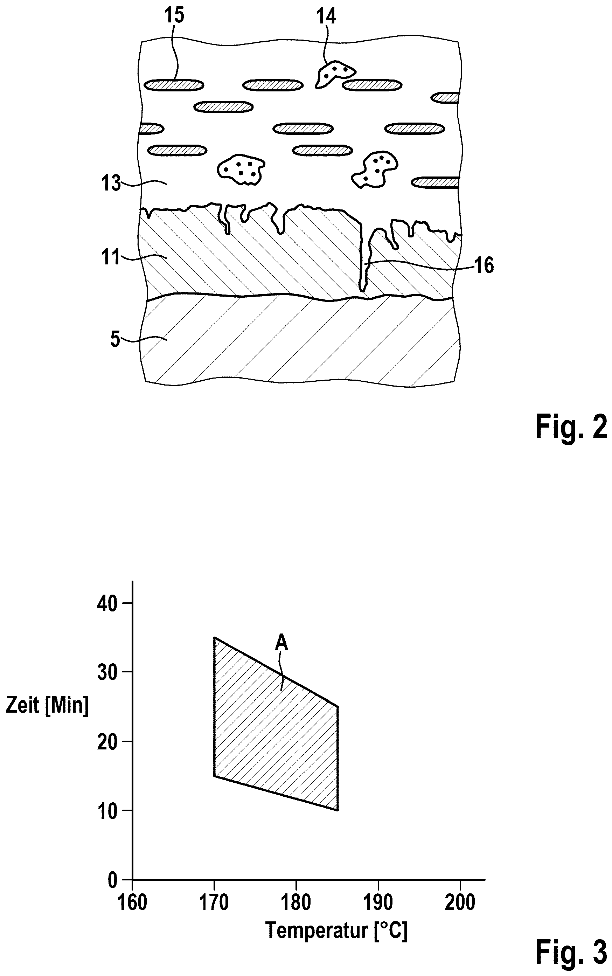

Zum Aushärten wird weiterhin eine Kombination von Temperatur und Einwirkungsdauer aus einem Bereich mit den Eckpunkten 170° C und 35 Minuten, 170° C und 15 Minuten, 185 °C und 10 Minuten und 185°C und 25 Minuten gewählt, wie er in Figur 3 der Zeichnung dargestellt und mit "A" gekennzeichnet ist. Insbesondere liegt die Kombination aus Temperatur und Einwirkungsdauer in einem dreiecksförmigen Bereich mit den Eckpunkten 170 °C und 35 Minuten, 170° C und 20 Minuten und 185° C und 15 Minuten. Mit "Temperatur" ist hier die Objekttemperatur gemeint, also die Temperatur der Oberfläche, auf die die zweite, organische Korrosionsschutzschicht aufgebracht wird.

Durch die genannten, relativ niedrigen Temperaturen und Einwirkungsdauern wird einerseits gewährleistet, dass es nicht zu einem ungewollten Anlassen des Grundkörpers kommt, andererseits kann sich die zweite, organische Korrosionsschutz in ausreichendem Maße mit der ersten, metallischen Korrosionsschutzschicht verbinden. Ist die erste, metallische Korrosionsschutzschicht eine ZnNi-Schicht, so kommt es durch die spezielle Wahl der Temperatur beim Aushärten der zweiten, organischen Korrosionsschutzschicht zu einer Vergrößerung und/oder Vermehrung der Mikrorisse der ZnNi-Schicht, wodurch eine stabile Verbindung zwischen den beiden Korrosionsschutzschichten gewährleistet ist.

Das Härten erfolgt vorzugsweise durch Einsatzhärten und umfasst insbesondere die Teilschritte Carbonitrieren und Induktivhärten, was sich als vorteilhaft im Hinblick auf den Erhalt der durch den Härtevorgang erhaltenen Härte des Stahls beim nachfolgenden Aushärten der zweiten, organischen Korrosionsschutzschicht bei den oben angegebenen Temperaturen und Einwirkungsdauern herausgestellt hat. Insbesondere wird nur ein Furchabschnitt der Betonschraube durch den Teilschritt Induktivhärten gehärtet.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels beschrieben, das in der Zeichnung dargestellt ist.

Es zeigen:
- Figur 1: eine Betonschraube, eingeschraubt in ein Bohrloch, in einer Schnittdarstellung;
- Figur 2: eine vergrößerte Darstellung des Details II der Figur 1 als Schnittbild durch die Betonschraube; und
- Figur 3: ein Zeit-Temperatur-Diagramm für die thermische Aushärtung der aufgebrachten zweiten, organischen Korrosionsschutzschicht.

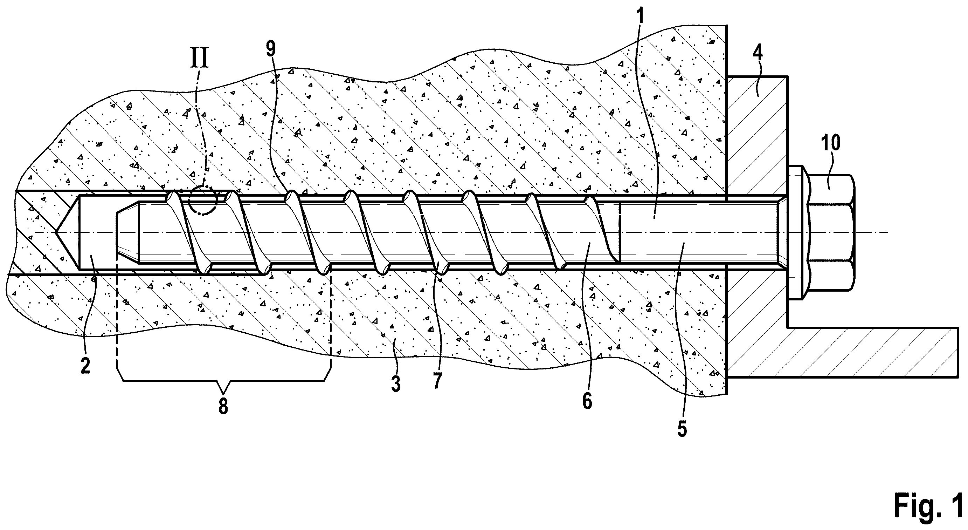

In Figur 1 ist eine erfindungsgemäße Betonschraube 1 in einem eingebauten Zustand dargestellt. Die Betonschraube 1 ist in ein Bohrloch 2 in einem Bauteil 3 eingeschraubt, wodurch ein Anbauteil 4 an dem Bauteil 3 befestigt ist. Im vorliegenden Fall ist das Anbauteil 4 eine Konsole aus Stahl, die an dem Bauteil 3, einer Stahlbetonwand, befestigt ist. Ein Grundkörper 5 der Betonschraube 1 ist aus einem Kohlenstoffstahl 20MnB4 mit der Werkstoffnummer 1.5525 durch Umformen einstückig hergestellt. Der Grundkörper 5 weist einen lang gestreckten Schaft 6 auf, um den ein Außengewinde 7 des Grundkörpers 5 angeordnet ist. Das Außengewinde 7 umfasst einen vorderen Furchabschnitt 8, mit dem ein Innengewinde 9 in die Wand des Bohrlochs 2 beim Einschrauben der Betonschraube 1 in das Bohrloch 2 eingeformt wird. Zum Ansetzen eines Schlagschraubers (nicht dargestellt) und zum Übertragen eines Drehmoments auf die Betonschraube 1 weist der Grundkörper 5 einen Außensechskant als Drehangriffmittel 10 am hinteren Ende auf. Der Grundkörper 3 wurde nach dem Umformen im Furchabschnitt 8 durch Carbonitrieren und Induktivhärten gehärtet, sodass das Außengewinde 7 im Furchabschnitt 8 eine Härte von mindestens 55 HRC aufweist. Das Außengewinde 8 ist somit hart genug, um das Innengewinde 9 beim Einschrauben in die Wand des Bohrlochs 2 furchen zu können.

Wie in Figur 2 zu sehen ist, wurde nach dem Härten ein ZnNi-Überzug als erste, metallische Korrosionsschutzschicht 11 galvanisch auf den Grundkörper 5 aufgebracht. Auf diese erste, metallische Korrosionsschutzschicht 11 wurde dann eine zweite, organische Korrosionsschutzschicht 12 aufgebracht und thermisch ausgehärtet. Diese zweite, organische Korrosionsschutzschicht 12, im Ausführungsbeispiel MKS Delta Seal Silber der Firma Dörken MKS-Systeme GmbH & Co. KG, ist ein Epoxidharz, das eine Matrix 13 bildet, in die Polytetrafluorethylen (PTFE) klümpchenartig und homogen verteilt als reibungsminderndes Schmiermittel 14 eingebettet ist. Durch die klümpchenartige Einbettung stört das Schmiermittel 14 die Matrix 13 nicht und reduziert somit deren Festigkeit nicht oder nicht wesentlich. In der Matrix 13 sind zudem Partikel 15 aus Aluminium enthalten, die die Abriebfestigkeit der Matrix 13 erhöhen und das Eindrehverhalten der Betonschraube 1 verbessern.

Nach dem Aufbringen der zweiten, organischen Korrosionsschutzschicht 12 wurde die Betonschraube 1 für 20 Minuten auf eine Temperatur von 180 °C erwärmt, sodass die Matrix 13, das Epoxidharz, aushärten konnte. Beim Erwärmen auf diese Temperatur haben sich Mikrorisse 16, die in der ZnNi-Schicht bereits vorhanden waren, vermehrt und/oder vergrößert. Die Matrix 13 füllt diese Mikrorisse 16 aus, wodurch eine feste Verbindung zwischen der ersten, metallischen Korrosionsschutzschicht 11 und der zweiten, organischen Korrosionsschutzschicht 12 entsteht. Das in die zweite, organische Korrosionsschutzschicht 12 klümpchenartig eingebettete reibungsmindernde Schmiermittel 14 bewirkt beim Eindrehen der Betonschraube 1 in das Bohrloch 2 eine Reduktion des zum Eindrehen benötigten Drehmoments, wobei die Matrix 13 verhindert, dass sich das Schmiermittel 14 vom Grundkörper 5 beziehungsweise von der ersten, metallischen Korrosionsschutzschicht 11 löst, was zu einer Erhöhung des Drehmoments während des Einschraubvorgangs führen würde.

### Bezugszeichenliste

### Betonschraube und Verfahren zur Herstellung der Betonschraube

- 1: Betonschraube
- 2: Bohrloch
- 3: Bauteil
- 4: Anbauteil
- 5: Grundkörper
- 6: Schaft
- 7: Außengewinde
- 8: Furchabschnitt
- 9: Innengewinde
- 10: Drehangriffmittel
- 11: erste, metallische Korrosionsschutzschicht
- 12: Zweite, organische Korrosionsschutzschicht
- 13: Matrix
- 14: reibungsminderndes Schmiermittel
- 15: Partikel
- 16: Mikroriss
- A: Bereich von möglichen Kombinationen aus Einwirkungsdauer und Temperatur

## Patentansprüche

1. Verfahren zur Herstellung einer Betonschraube (1) zum Einschrauben in ein Bohrloch (2) in einem Bauteil (3) aus Beton, wobei ein Grundkörper (5) der Betonschraube (1) aus Stahl hergestellt ist und wobei auf dem Grundkörper (5) eine erste, metallische Korrosionsschutzschicht (11) und auf dieser Korrosionsschutzschicht (11) ein reibungsminderndes Schmiermittel (14) aufgebracht ist, wobei das reibungsmindernde Schmiermittel (14) in einer Matrix (13) einer zweiten, organischen Korrosionsschutzschicht (12) angeordnet ist, die auf der ersten, metallischen Korrosionsschutzschicht (11) aufgebracht ist,
welches die folgenden Verfahrensschritte umfasst:
- Herstellen des Grundkörpers (5) aus Stahl, der ein Außengewinde (7) aufweist, insbesondere durch Umformen,
- Härten zumindest eines Teils des Außengewindes (7),
- Aufbringen der ersten, metallischen Korrosionsschutzschicht (11) auf den Grundkörper (5), und
- Aufbringen und Aushärten der zweiten, organischen Korrosionsschutzschicht (12), die das reibungsmindernde Schmiermittel (14) und die anorganischen Partikel (15) enthält, auf die erste, metallische Korrosionsschutzschicht (11),
**dadurch gekennzeichnet,**
- **dass** zum Aushärten eine Kombination von Temperatur und Einwirkungsdauer aus einem Bereich (A) mit den Eckpunkten 170° C und 35 Minuten, 170° C und 15 Minuten, 185 °C und 10 Minuten und 185°C und 25 Minuten gewählt wird.

2. Verfahren gemäß Anspruch 1, **dadurch gekennzeichnet, dass** die erste, metallische Korrosionsschutzschicht (11) ein Zink-Nickel-Überzug ist, der galvanisch auf den Grundkörper (5) aufgebracht wird.

3. Verfahren gemäß einem der vorstehenden Ansprüche, **dadurch gekennzeichnet, dass** das Aushärten bei einer Temperatur erfolgt, die bei einer Einwirkungsdauer von 35 Minuten 170 °C und bei einer Einwirkungsdauer von 25 Minuten 185 °C nicht überschreitet, wobei Zwischenwerte durch lineare Interpolation ermittelbar sind.

4. Verfahren gemäß einem der vorstehenden Ansprüche, **dadurch gekennzeichnet, dass** das Härten durch Einsatzhärten erfolgt und insbesondere die Teilschritte Carbonitrieren und Induktivhärten umfasst.

## Claims

1. Method for manufacturing a concrete screw (1) for screwing into a drilled hole (2) in a concrete component (3), wherein the main body (5) of the concrete screw (1) is made of steel and wherein a first, metallic anti-corrosion layer (11) is applied to the main body (5) and a friction-reducing lubricant (14) is applied to this corrosion protection layer (11), wherein the friction-reducing lubricant (14) is arranged in a matrix (13) of a second, organic anti-corrosion layer (12) which is applied to the first, metallic anti-corrosion layer (11),
which comprises the following process steps:
- Manufacturing the main body (5) from steel, which has an external thread (7), in particular by forming,
- hardening at least part of the external thread (7),
- applying the first, metallic anti-corrosion layer (11) to the main body (5), and
- applying and hardening the second, organic anti-corrosion layer (12), which contains the friction-reducing lubricant (14) and the inorganic particles (15), onto the first, metallic anti-corrosion layer (11),
**characterized in that,**
- that for curing, a combination of temperature and exposure time is selected from a range (A) with the corner points 170°C and 35 minutes, 170°C and 15 minutes, 185°C and 10 minutes, and 185°C and 25 minutes .

2. Method according to claim 1, **characterized in that** the first, metallic anti-corrosion layer (11) is a zinc-nickel coating which is applied to the main body (5) by electroplating.

3. Method according to one of the preceding claims, **characterized in that** the curing takes place at a temperature which does not exceed 170 °C for an exposure time of 35 minutes and 185 °C for an exposure time of 25 minutes, whereby intermediate values can be determined by linear interpolation.

4. Method according to one of the preceding claims, **characterized in that** the hardening is carried out by case hardening and in particular comprises the substeps of carbonitriding and induction hardening.

## Revendications

1. Procédé de fabrication d'une vis à béton (1) destinée à être vissée dans un trou de forage (2) dans un composant (3) en béton, un corps principal (5) de la vis à béton (1) étant fabriqué en acier et une première couche de protection anticorrosion métallique (11) et sur laquelle est appliqué un lubrifiant réducteur de friction (14) qui est disposé dans une matrice (13) de la deuxième couche de protection anticorrosion organique (12) qui est appliquée sur la première couche de protection anticorrosion métallique (11),
qui comprend les étapes suivantes:
- fabrication du corps principal (5) en acier, qui présente un filetage externe (7), en particulier par formage,
- trempe d'au moins une partie du filetage externe (7),
- application de la première couche de protection anticorrosion métallique (11) sur le corps principal (5), et
- application et durcissement de la deuxième couche de protection anticorrosion organique (12), qui contient le lubrifiant réducteur de friction (14) et les particules inorganiques (15), sur la première couche de protection anticorrosion métallique (11),
**caractérisée en ce que,**
- que pour le durcissement, on choisit une combinaison de température et de durée d'exposition dans une plage (A) avec les points d'angle 170 °C et 35 minutes, 170 °C et 15 minutes, 185 °C et 10 minutes et 185 °C et 25 minutes.

2. Procédé selon la revendication 1, **caractérisé en ce que** la première couche de protection anticorrosion métallique (11) est un revêtement zinc-nickel qui est appliqué par galvanisation sur le corps principal (5).

3. Procédé selon l'une des revendications précédentes, **caractérisé en ce que** le durcissement s'effectue à une température qui ne dépasse pas 170 °C pour une durée d'exposition de 35 minutes et 185 °C pour une durée d'exposition de 25 minutes, les valeurs intermédiaires pouvant être déterminées par interpolation linéaire.

4. Procédé selon l'une des revendications précédentes, **caractérisé en ce que** le durcissement s'effectue par cémentation et comprend en particulier les étapes partielles de carbonitruration et de trempe par induction.
